**Europäisches Patentamt**

**European Patent Office**

**Office européen des brevets**

(19)

(11) Numéro de publication: **0 194 213**
**B1**

(12) # FASCICULE DE BREVET EUROPÉEN

(45) Date de publication du fascicule du brevet:
10.05.89

(51) Int. Cl.⁴: **G 01 P 1/02,** G 01 P 3/488

(21) Numéro de dépôt: **86420051.4**

(22) Date de dépôt: **20.02.86**

(54) Perfectionnements aux capteurs électromagnétiques.

(30) Priorité: **26.02.85 FR 8503006**

(43) Date de publication de la demande:
**10.09.86 Bulletin 86/37**

(45) Mention de la délivrance du brevet:
**10.05.89 Bulletin 89/19**

(84) Etats contractants désignés:
**DE GB IT**

(56) Documents cité:
**WO-A-85/01112**
**FR-A-2 231 007**
**FR-A-2 238 154**
**GB-A-2 107 882**
**US-A-3 838 372**

(73) Titulaire: **Société à Responsabilité Limitée L'ELECTRICFIL INDUSTRIE, 12, rue du Commandant Faurax, F-69452 Lyon Cedex 06 (FR)**

(72) Inventeur: **Kohen, Izak, 23, domaine des Contamines, F-69140 Rillieux La Pape (FR)**

(74) Mandataire: **Ropital- Bonvarlet, Claude, Cabinet BEAU DE LOMENIE 99, Grande rue de la Guillotière, F-69007 Lyon (FR)**

EP 0 194 213 B1

## Description

La présente invention concerne les capteurs à caractère électromagnétique, utilisés pour déterminer la position d'une pièce mobile, en relation avec une référence fixe généralement ou, encore, la vitesse de défilement d'une telle pièce mobile.

De tels capteurs comprennent, généralement comme décrit dans FR-A-2 238 154, un corps en matière isolante contenant, dans un alésage axial, au moins un élément magnétique affleurant l'une des extrémités du corps qui forme, concentriquement à cet élément, une bobine recouverte par un bobinage de fil raccordé à deux conducteurs. Le corps est noyé dans une protection extérieure en matière isolante, afin de soustraire le bobinage et les conducteurs aux agressions mécaniques, physiques ou chimiques du milieu environnant.

De tels capteurs donnent, généralement, satisfaction pour la fonction devant être assumée.

Toutefois, dans certaines applications, on constate que la conception de tels capteurs pose un problème de fiabilité. Ceci est le cas pour les capteurs destinés à être inclus à un milieu fluide subissant des variations de température et de pression. A titre d'exemple, cela est le cas des capteurs inclus à une boîte de changement de rapport de démultiplication à fonctionnement automatique, de tels capteurs devant, dans ce cas, assumer la fonction de mesure de vitesse des différents arbres en étant placés dans le fluide hydraulique.

Dans les applications ci-dessus, on a constaté que les capteurs n'étaient pas étanches et qu'ils étaient le siège d'une fuite permanente de fluide vers l'extérieur.

L'examen de ce problème a permis de constater que la fuite provenait d'une absence de liaison intime entre le corps et sa protection extérieure. Outre l'aspect polluant qui en résulte, une telle fuite a aussi pour conséquence de mettre en relation le fluide et le bobinage qui risque ainsi de subir des dégradations par corrosion et de rendre alors le capteur inopérant ou peu fiable.

L'absence de liaison intime, entre la protection extérieure et le corps, même si ces deux éléments sont réalisés à partir d'une même matière première, semble devoir être mise au compte du procédé de fabrication. En effet, lorsque le surmoulage est exécuté, le corps ne peut se réchauffer suffisamment, malgré toutes les précautions prises à l'injection. Il en résulte une absence de liaison intime entre la matière du corps et la matière de la protection extérieure, notamment sur la face frontale, dans le plan de laquelle affleure la face transversale de l'élément magnétique du capteur.

Pour tenter de régler un tel problème, on aurait pu penser à surmouler la protection extérieure, de manière à faire venir un voile transversal devant la face frontale pour masquer l'intervalle périphérique entre la protection extérieure et le bobinage et recouvrir, également, la face transversale de l'élément magnétique.

Cependant, une telle proposition se heurte à un certain nombre d'obstacles techniques insurmontables. On conçoit que la technique mise en oeuvre pour la réalisation de tels capteurs ne permet à ces derniers de délivrer qu'un signal faible. Par conséquent, pour qu'une telle proposition n'ait pas d'incidence négative sur le fonctionnement du capteur, il importe, impérativement, de déterminer avec précision l'épaisseur de la paroi frontale de la protection, de manière à limiter l'entrefer, tout en conférant à cette paroi une résistance mécanique convenable, notamment au poinçonnage.

A titre d'exemple, il peut être considéré que, pour un capteur électromagnétique d'usage courant, l'épaisseur de cette paroi frontale doit être limitée à 3/10e de mm.

Compte tenu des méthodes de surmoulage, on comprend que cette opération ne peut être menée à bien qu'en supportant le corps en porte-à-faux à l'intérieur d'un moule. Si des moyens habituels sont mis en oeuvre pour assurer un tel support, il est pratiquement impossible d'être assuré de pouvoir disposer, dans tous les cas, de façon reproductible sur de grande séries, l'extrémité frontale du corps par rapport au fond du moule, de manière à ménager un intervalle égal à 3/10e de mm, quelles que soient les variations de température et de pression intervenant au cours d'un cycle d'injection de matière plastique.

En réalité, de telles variations du cycle seront responsables d'une modification de la position du corps à l'intérieur du moule et conduiront à l'obtention d'une paroi frontale d'épaisseur essentiellement variable, entre plusieurs capteurs fabriqués.

Si cette épaisseur est, par exemple, égale à 2/10e de mm, au lieu de 3/10e, il est possible de considérer qu'il s'agit là d'un gain pour l'entrefer, toutefois compensé par une pénalité quant à la résistance mécanique. Si, par contre, l'épaisseur de cette paroi passe à 4/10e de mm, la résistance mécanique est accrue, mais alors le signal fourni est affecté d'une perte pouvant atteindre 10 % de sa grandeur, ce qui est important lorsqu'on veut réaliser des capteurs électromagnétiques à rapport performance/volume, élevé.

L'incertitude de fabrication avec un tel procédé conduirait donc à l'obtention de capteurs à caractéristiques non reproductibles et, surtout, de fonctionnement non fiable.

L'objet de l'invention est de remédier au problème ci-dessus, en proposant un nouveau capteur et son procédé de fabrication permettant d'obtenir des produits fiables, sûrs, résistants, susceptibles d'être fabriqués en grande série, ayant des caractéristiques de fonctionnement reproductibles, sans altération variable du signal qu'ils émettent et capables d'établir, lors de leur montage, une étanchéité totale entre le milieu extérieur et un volume fluide dans lequel ils sont plongés.

Pour atteindre les buts ci-dessus, l'objet de l'invention est caractérisé en ce qu'il comprend
- un corps comportant des moyens de centrage concentrique extérieur,
- une protection extérieure formée par
> > >. un godet tubulaire en matière isolante fermé à une extrémité par une paroi transversale et ouvert à l'autre qui est bordée par une collerette d'ancrage, ce godet étant enfilé concentriquement sur les moyens de centrage du corps,
. et par un enrobage en au moins une matière isolante occupant l'intervalle délimité entre le corps et le godet et formant hors du godet une embase d'appui enrobant la collerette d'ancrage et la partie du corps s'étendant hors du godet.

Diverses autres caractéristiques ressortent de la description faite ci-dessous en référence au dessin annexé qui montre, à titre d'exemples non limitatifs, des formes de réalisation de l'objet de l'invention.

La fig. 1      est une coupe-élévation du capteur électromagnétique conforme à l'invention.
La fig. 2      est une coupe transversale prise selon la ligne II - II de la fig. 1.
La fig. 3      est une coupe-élévation partielle d'un élément constitutif de l'objet de l'invention, illustrant une variante de réalisation.

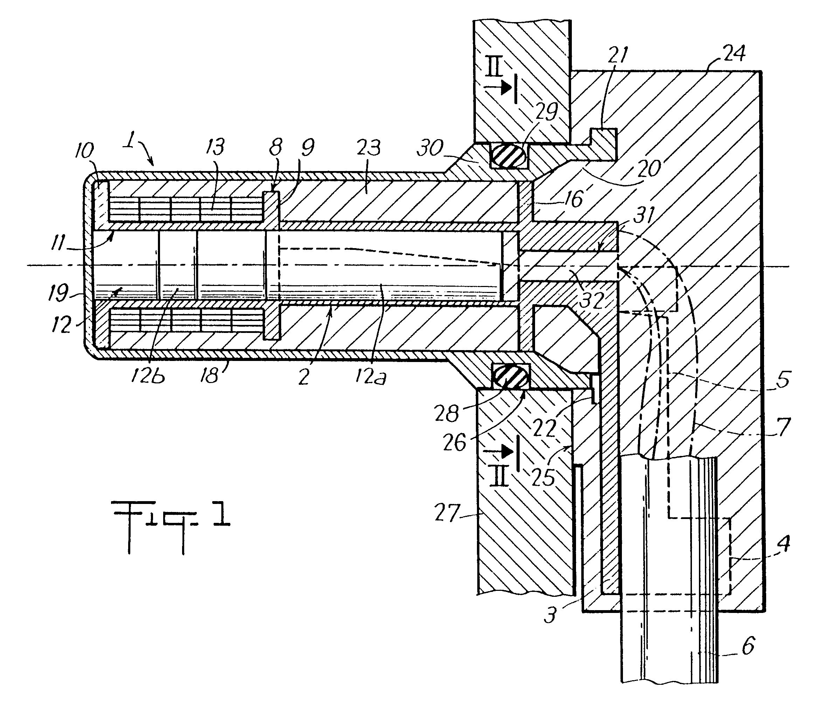

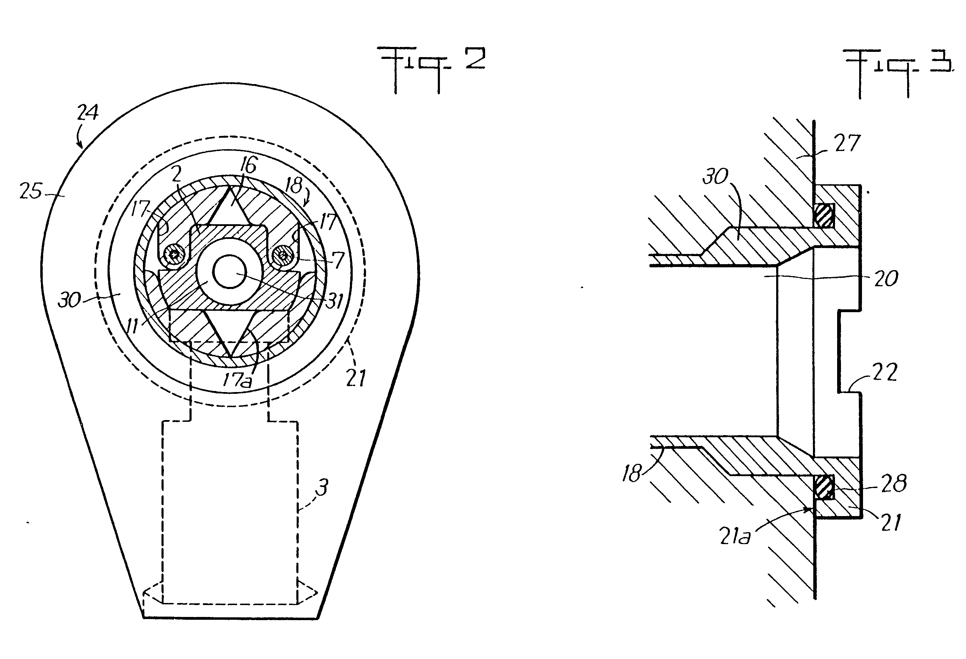

Selon les fig. 1 et 2, le capteur de l'invention comprend une protection extérieure 1 dans laquelle est noyé un corps 2 réalisé en une matière isolante moulée. Le corps 2 peut comporter, à l'une de ses extrémités et selon l'exemple illustré, une barrette 3 s'étendant perpendiculairement au corps 2 avec lequel elle forme une pièce monobloc en "L". La barrette 3 comporte une pince 4 et, le long de ses côtés longitudinaux, des ailes 5 pour assurer le maintien et le guidage d'un câble 6 comprenant, par exemple, deux conducteurs électriques 7. Bien que cela ne soit pas représenté, il doit être considéré que le corps 2 peut comporter des moyens propres de contact électrique, tels que des languettes. De même, la barrette 3 pourrait être formée, non pas perpendiculairement à l'une des extrémités du corps 2, mais dans le prolongement de ce dernier, le cas échéant.

Le corps 2 forme, à l'opposé de la barrette 3, une bobine 8 délimitée par deux joues 9 et 10 définissant un noyau central de périphérie circulaire. La bobine 8 présente, en son centre, un logement cylindrique 11 se prolongeant axialement, au moins en partie, à l'intérieur du corps 2. Le logement 11 est réservé au montage d'au moins un élément métallique 12 à caractère magnétique, de préférence formé par une pièce magnétique 12a et une pièce polaire 12b prévue pour affleurer la face transversale de la joue 10.

La bobine 8 supporte un enroulement d'un fil conducteur émaillé, formant un bobinage 13 contenu par le noyau cylindrique entre les joues 9 et 10. Les extrémités du fil de bobinage 13 sont raccordées aux conducteurs électriques 7 ou aux contacts à languette.

Selon l'invention, le corps 2 est réalisé pour comporter des moyens de centrage concentrique extérieur, de tels moyens étant formés, d'une part, par la joue extrême 10 et, d'autre part, par une collerette de centrage 16 venue de moulage sur le corps 2, à proximité de la partie de ce dernier jouxtant la barrette 3. La collerette 16 présente deux encoches 17 ménagées à partir de la périphérie, selon deux directions sensiblement parallèles, pour permettre l'engagement et le passage des conducteurs 7 ou contacts à languette raccordés au bobinage 13.

Selon l'invention, la protection extérieure 1 comprend un godet tubulaire cylindrique 18 en matière isolante, de préférence réalisé par moulage de la même matière isolante que celle du corps 2. Le godet 18 comporte une extrémité fermée par une paroi transversale 19, de faible épaisseur constante. Cette paroi 19, venue de moulage, peut être obtenue de façon à présenter une épaisseur exactement contrôlée, reproductible en cas de fabrication en grande série du godet 18. A l'opposé de la paroi transversale 19, le godet 18 comporte une extrémité ouverte 20 bordée par une collerette d'ancrage 21 qui peut être formée par une couronne périphérique, de section transversale constante ou comportant des aspérités, des empreintes négatives ou positives. La fig. 1 montre que la collerette d'ancrage 21 peut comporter aussi une encoche 22 d'engagement de la partie correspondante de la barrette 3.

Le godet 18 est enfilé sur le corps 2, pour coopérer avec la joue 10 et la collerette 16, de manière à occuper une position exactement centrée sur le corps 2 qui est immobilisé angulairement par la coopération de la barrette 3 et de l'encoche 22. L'engagement est effectué de manière à amener la face interne de la paroi frontale 19 du godet 18 en contact avec la face extérieure transversale de la joue 10 qui détermine ainsi une position d'engagement en butée axiale.

L'assemblage est effectué après équipement complet du corps 2 et liaison électrique entre le bobinage 13 et les conducteurs 7 ou contacts à languette.

Dans cet état, l'assemblage obtenu est soumis à une opération d'enrobage par une ou plusieurs couches de matières isolantes. L'enrobage 23 est exécuté de manière à occuper totalement l'intervalle entre la face périphérique interne du godet 18 et le corps 2 et, à cet égard, les encoches 17 sont mises à profit pour assurer un bon cheminement de la matière lors du remplissage et éviter toute création de zone de moindre circulation ou d'absence de circulation susceptible de laisser subsister des vides. En ce sens, la fig. 2 montre que la collerette 16 est, également, réalisée de manière à comporter une ou plusieurs ouvertures 17a, situées de façon sensiblement diamétralement opposée aux encoches 17.

L'exécution de l'enrobage 23, par tout procédé approprié, est aussi réalisée de manière à former une embase d'appui 24 emprisonnant la collerette d'ancrage 21, la barrette 3, ainsi que le câble 6, les conducteurs 7 ou la base des contacts à languette. L'embase d'appui est réalisée pour comporter une face plane de contact 25 bordant le godet 18.

L'enrobage 23 et l'embase 24, qui peuvent aussi être formés d'une seule pièce, confèrent ainsi, aux différents éléments constitutifs du capteur électromagnétique, un caractère pseudomonobloc.

Ainsi que cela apparaît à la fig. 1, le capteur obtenu peut être engagé à travers une portée 26 prévue dans une paroi 27, par exemple d'une boîte de changement de rapports de démultiplication à fonctionnement automatique. La construction selon l'invention, illustrée par la fig. 1, permet de constater que la partie active du capteur, plongeant dans le fluide, ne comporte aucune interface susceptible de représenter un cheminement de fuite possible et que l'interface existant entre certains des éléments constitutifs est limitée uniquement à celle résultant du surmoulage de l'embase d'appui 24 sur la collerette 21. Toutefois, cette interface est alors disposée extérieurement au fluide et peut être convenablement isolée par un joint d'étanchéité 28, tel qu'un joint torique.

Le joint torique 28 peut être monté dans une gorge 29 délimitée dans un collet 30 formé à la périphérie du godet 18. La fig. 3 montre que la gorge 29 peut aussi être ménagée dans la collerette 21 comportant alors, à cet effet, un retour 21a en direction de la face frontale 19. Dans un tel cas, le joint d'étanchéité 28 coopère alors, non plus avec la portée 26 d'engagement du capteur, mais avec la face d'appui extérieure de la paroi 27.

De façon à obtenir un appui certain de l'élément magnétique 12 contre la paroi transversale 19 et bénéficier ainsi de la précision de réalisation en épaisseur de cette dernière pour limiter à une valeur connue l'entrefer de fonctionnement, le procédé de l'invention prévoit de faire communiquer le logement 11 avec un trou 31 délimité axialement dans le corps 2, pour s'ouvrir à l'opposé de la joue 10. Ce trou 31 est prévu pour que, lors de la phase d'injection de la matière constitutive de l'enrobage 23 et de l'embase 24, la matière amenée à pénétrer dans ce trou applique, sur la face correspondante de l'élément 12, la pression d'injection forçant cet élément à coulisser axialement à l'intérieur du logement 11, pour que sa face extrême soit plaquée contre la face interne de la paroi frontale 19. Le trou 31 peut être combiné avec l'exécution d'un logement 11 de longueur supérieure à celle de l'élément 12, de manière qu'après déplacement axial de ce dernier sous l'influence de la pression d'injection de la matière d'enrobage, cette matière forme une carotte épaulée 32 occupant le trou 31 et, en partie, le logement 11 et s'opposant à tout risque ultérieur de déplacement axial en retrait de l'élément magnétique 12.

**Revendications**

1. Capteur électromagnétique, du type comprenant un corps (2) en matière isolante contenant un élément (12) magnétique axial et formant une bobine coaxiale (8) supportant un bobinage (13) raccordé à deux éléments conducteurs (7) longeant le corps qui est noyé dans une protection extérieure (1)
caractérisé en ce que:
- le corps (2) forme des moyens (10, 16) de centrage concentrique extérieur,
 - la protection extérieure (1) est formée par:
 > > >. un godet tubulaire (18) en matière isolante fermé à une extrémité par une paroi transversale (19) et ouvert à l'autre qui est bordée par une collerette d'ancrage (21), ce godet étant enfilé concentriquement sur les moyens du corps,
 . et par un enrobage (23) en au moins une matière isolante occupant l'intervalle délimité entre le corps et le godet et formant hors du godet une embase d'appui (24) enrobant la collerette d'ancrage et la partie du corps s'étendant hors du godet.

2. Capteur électromagnétique selon la revendication 1, caractérisé en ce que le godet (18) est associé au corps, de manière que la paroi transversale (19) de son extrémité fermée soit en contact avec la face transversale en regard de l'élément magnétique du corps.

3. Capteur électromagnétique selon la revendication 1 ou 2, caractérisé en ce que le godet (18) délimite une gorge 29 de montage d'un joint d'étanchéité.

4. Capteur électromagnétique selon la revendication 3, caractérisé en ce que la gorge (29) est ménagée périphériquement dans la partie du godet située à proximité de l'embase d'appui.

5. Capteur électromagnétique selon la revendication 3, caractérisé en ce que la gorge (29) est ménagée dans le godet, dans le même plan que la face d'appui de l'embase.

6. Capteur électromagnétique selon la revendication 1, caractérisé en ce que le corps délimite un alésage axial (11) formant un logement pour l'élément magnétique (12), un tel logement étant prolongé, dans la partie du corps dirigée vers l'embase, par un trou traversant (31) occupé par la matière constitutive de l'embase.

7. Capteur électromagnétique selon la revendication 6, caractérisé en ce que l'alésage axial (11) présente une longueur supérieure à celle de l'élément magnétique et ménage avec le trou traversant (31) un volume occupé par une carotte épaulée (32) de matière de surmoulage.

8. Capteur électromagnétique selon la revendication 1, caractérisé en ce que le corps (2) comporte une barrette (3) s'étendant perpendiculairement à l'axe du corps.

9. Capteur électromagnétique selon la revendication 1, caractérisé en ce que le corps (2) comporte une barrette (3) s'étendant parallèlement à l'axe du corps (2).

10. Procédé de fabrication d'un capteur électromagnétique selon l'une des revendications 1 à 9, caractérisé en ce qu'il consiste à:
- réaliser par moulage d'une matière isolante un corps délimitant une bobine, présentant un logement concentrique à la bobine et comportant des moyens de connexion électrique,
- constituer sur la bobine un bobinage d'un fil électrique isolant raccordé aux moyens de connexion électrique,
- réaliser par moulage d'une matière isolante un godet ayant une paroi frontale d'épaisseur déterminée et susceptible d'être enfilée sur le corps jusqu'en appui de cette paroi contre la bobine,
- réaliser un enrobage pour, d'une part, occuper tout le volume libre entre le corps et le godet pour recouvrir la bobine et établir une liaison intime entre ledit corps et le godet et, d'autre part, former une embase d'appui sur une paroi de fixation.

## Patentansprüche

1. Elektomagnetischer Aufnehmer, vom Typ mit einem Körper (2) aus isolierendem Material, der ein axiales magnetisches Element (12) aufweist und eine koaxiale Spule (8) bildet, die eine Wicklung (13) trägt, die mit zwei Leiterelementen (7) verbunden ist, die längs des Körpers angeordnet sind, der in eine äußere Schutzhülle (1) eingetaucht ist, dadurch gekennzeichnet, daß:
- der Körper (2) äußere konzentrische Zentrierungsmittel (10, 16) bildet,
- die äußere Schutzhülle (1) gebildet wird durch:
> > >. einen ringförmigen Becher (18) aus isolierendem Material, der an einem Ende durch eine Querwand (19) geschlossen ist und am anderen Ende offen ist, das begrenzt ist durch einen Verankerungskragen (21), wobei der Becher konzentrisch auf die Mittel des Körpers aufgefädelt ist,
. und durch eine Umhüllung (23) aus wenigstens einem isolierenden Material, die den von dem Körper und dem Becher begrenzten Zwischenraum besetzt, und außerhalb des Bechers eine Stützfläche (24) bildet, die den Verankerungskragen und den Bereich des Körpers umgibt, der sich außerhalb des Bechers erstreckt.

2. Elektromagnetischer Aufnehmer nach Anspruch 1, dadurch gekennzeichnet, daß der Becher (18) dem Körper derart zugeordnet ist, daß die Querwand (19) seines geschlossenen Endes in Kontakt ist mit der Querwand gegenüber dem magnetischen Element des Körpers.

3. Elektromagnetischer Aufnehmer nach Anspruch 1 oder 2, dadurch gekennzeichnet, daß der Becher (18) eine Nut (29) zur Aufnahme einer Dichtung begrenzt.

4. Elektromagnetischer Aufnehmer nach Anspruch 3, dadurch gekennzeichnet, daß die Nut (29) am Umfang in dem Bereich des Bechers ausgebildet ist, der in der Nähe der Stützfläche angeordnet ist.

5. Elektromagnetischer Aufnehmer nach Anspruch 3, dadurch gekennzeichnet, daß die Nut in dem Becher in derselben Ebene angeordnet ist, wie die Andruckseite der Stützfläche.

6. Elektromagnetischer Aufnehmer nach Anspruch 1, dadurch gekennzeichnet, daß der Körper eine Axialbohrung (11) begrenzt, die ein Lager für das magnetische Element (12) bildet, wobei ein solches Lager in dem Bereich des Körpers durch ein Durchgangsloch (31) verlängert ist, der auf die Stützfläche gerichtet ist, wobei das Durchgangsloch (31) durch das die Stützfläche bildende Material ausgefüllt ist.

7. Elektromagnetischer Aufnehmer nach Anspruch 6, dadurch gekennzeichnet, daß die axiale Bohrung (11) eine Länge aufweist, die größer ist als die Länge des magnetischen Elements, und mit dem Durchgangsloch (31) ein Volumen bildet, das von einem mit Schultern versehenen Eingußzapfen (32) aus Übergußmaterial besetzt ist.

8. Elektromagnetischer Aufnehmer nach Anspruch 1, dadurch gekennzeichnet, daß der Körper (2) einen Stab (3) aufweist, der sich senkrecht zur Achse des Körpers erstreckt.

9. Elektromagnetischer Aufnehmer nach Anspruch 1, dadurch gekennzeichnet, daß der Körper (2) einen Stab (3) aufweist, der sich parallel zur Achse des Körpers (2) erstreckt.

10. Verfahren zur Herstellung eines elektromagnetischen Aufnehmers nach einem der Ansprüche 1 bis 9, dadurch gekennzeichnet, daß:
- ein Körper durch Formen bzw. Gießen eines isolierenden Materials gebildet wird, der eine Spule begrenzt, wobei er ein zur Spule konzentrisches Lager und elektrische Verbindungsmittel aufweist,
- auf der Spule ein Wickel eines elektrisch isolierten Drahtes gebildet wird, der mit den elektrischen Verbindungsmitteln verbunden ist,
- durch Formen eines isolierenden Materials ein Becher gebildet wird, der eine Vorderwand einer bestimmten Dicke aufweist und geeignet ist, auf den Körper bis in Anlage an die Wand gegen die Spule aufgefädelt bzw. aufgebracht zu werden,
- eine Umhüllung zum Besetzen des freien Volumens zwischen dem Körper und dem Becher einerseits, um die Spule zu überdecken und eine enge Verbindung zwischen dem Körper und dem Becher zu schaffen, und um andererseits eine Stützfläche auf einer Befestigungswand zu bilden, gebildet wird.

## Claims

1. Electromagnetic sensor, of the type comprising a body (2) in insulating material containing an axial magnetic element (12) and forming a co-axial coil (8) supporting a winding (13) connected to two conducting wires (7) extending along the body which is encapsulated in an external protection (1), characterized in that:
- a body (2) forms external self-centering means,
- an external protection (1) is formed by
> > > . a tubular sleeve (18) in insulating material closed at one end by a transversal wall (19) and open at its other end which is edged by an anchoring flange (21), said sleeve being concentrically threaded over the body centering means,
. and by an encapsulation (23) of at least one insulating material filling the gap defined between the body and the sleeve and forming outside the sleeve a support seat (24) covering up the anchoring flange and the part of body projecting from the sleeve.

2. Electromagnetic sensor according to claim 1, characterized in that the sleeve (18) is associated to the body, in such a way that the transversal wall (19) of its closed end contacts with the facing transversal wall of the magnetic element of the body.

3. Electromagnetic sensor according to claim 1 or 2, characterized in that the sleeve (18) defines a groove (29) for mounting a tight joint.

4. Electromagnetic sensor according to claim 3, characterized in that the groove (29) is formed peripherally in that part of the sleeve situated close to the support seat.

5. Electromagnetic sensor according to claim 3, characterized in that the groove (29) is provided in the sleeve in the same plane as the supporting face of the seat.

6. Electromagnetic sensor according to claim 1, characterized in that the body defines an axial bore (11) forming housing for the magnetic element (12), said housing being extended in that part of the body directed towards the seat, by a through hole (31) containing the same material as that constituting the seat.

7. Electromagnet sensor according to claim 6, characterized in that the length of the axial bore (11) is greater than that of the magnetic element and said bore constitutes with the through hole (31) a volume occupied by a shouldered core (32) of molding material.

8. Electromagnetic sensor according to claim 1, characterized in that the body (2) comprises a bar (3) which extends perpendicularly to the axis of said body.

9. Electromagnetic sensor according to claim 1, characterized in that the body (2) comprises a bar (3) which extends in parallel to the axis of said body (2).

10. Process for the production of an electromagnetic sensor according one of claims 1 to 9, characterized in that it consists in:
- producing by molding an insulating material a body defining a bobbin, presenting a housing concentric to said bobbin and comprising electrical connection means,
- constituting on the bobbin a winding of an insulating electric wire connected to the electrical connection means,
- producing, by molding an insulating material, a sleeve having a front wall of predetermined thickness, adapted to be threaded on the body until said wall rests against the bobbin,
- producing an encapsulation in order, on the one hand, to occupy the free volume between the body and the sleeve in order to cover the bobbin and to create a close connection between said body and the sleeve and, on the other hand, form a support base on a fastening wall.

Fig. 1

Fig. 2

Fig. 3

EP 0 194 213 B1